# EUROPÄISCHE PATENTSCHRIFT

(11) **EP 2 988 045 B1**
(45) Veröffentlichungstag und Bekanntmachung des Hinweises auf die Patenterteilung: **02.12.2020**
(21) Anmeldenummer: 15180130.5
(22) Anmeldetag: 07.08.2015
(51) Int. Cl.: F16L 5/08, F16L 5/14, H02G 3/22

(54) **DICHTUNG FÜR EINE HAUSEINFÜHRUNG, INSBESONDERE MEHRSPARTENHAUSEINFÜHRUNG**
SEAL FOR A HOUSE FEED-IN, IN PARTICULAR MULTI-SECTION HOUSE FEED-IN
JOINT DE BRANCHEMENT DOMESTIQUE, EN PARTICULIER UN BRANCHEMENT DOMESTIQUE MULTI-VOIES

(30) Priorität: 18.08.2014 DE 202014006692 U
(43) Veröffentlichungstag der Anmeldung: 24.02.2016
(60) Teilanmeldung: 20198521.5
(73) Patentinhaber: DOYMA GmbH & Co, 28876 Oyten (DE)
(72) Erfinder: Wagner, Thomas, 27777 Ganderkesee (DE)
(74) Vertreter: Eisenführ Speiser

(56) Entgegenhaltungen:
- WO-A1-2013/160776
- DE-A1-102004 025 148
- DE-A1-102007 032 891
- DE-U1- 9 102 824
- DE-U1-202011 102 722

## Beschreibung

Die vorliegende Erfindung betrifft eine Dichtung zum Abdichten gegen Medienleitungen, wobei die Dichtung eine Durchgangsrichtung für Medienleitungen aufweist, zumindest teilweise aus einem elastisch komprimierbaren Material besteht, und dazu eingerichtet ist, mittels Verspannen der Dichtung in Durchgangsrichtung eine Dichtwirkung zu erzeugen, und wobei die Dichtung mindestens eine in einer Schnittebene quer zur Durchgangsrichtung außermittig angeordnete Durchgangsöffnung zur Aufnahme von Medienleitungen und/oder Spannmitteln in Durchgangsrichtung aufweist.

Die Erfindung betrifft solche Dichtungen, die eingerichtet sind zur Verwendung als Dichteinsatz in einer korrespondierenden Aufnahme einer Hauseinführung, insbesondere Mehrspartenhauseinführung.

Die Erfindung betrifft ferner solche Dichtungen, die eingerichtet sind zur Verwendung als Dichteinsatz in einem Durchbruch einer Gebäudewand, insbesondere Hauswand.

Dichtungen der vorgenannten Art werden in Gebäuden dazu verwendet, Medienleitungen, die von außen in das Gebäude hinein verlegt werden, gegen die leitungsführenden Hauseinführungen oder Durchbrüche in den Gebäudewänden abzudichten. Die Hauseinführungen oder Durchbrüche werden zu diesem Zweck in den Gebäudewänden oder auch in Bodenplatten vorgesehen. Hauseinführungen werden eingelassen, befestigt und gegen die jeweilige Öffnung in der Bewandung abgedichtet.

Im Falle der Durchführung der Medienleitungen unmittelbar durch einen Durchbruch werden die vorgenannten Dichtungen zwischen die Medienleitung(en) und den Durchbruch gesetzt, um dort abzudichten.

Im Rahmen der Erfindung werden unter Medienleitungen insbesondere Rohrleitungen für Fluide, (flüssig und/oder gasförmig), Stromkabel, Datenkabel oder Lichtwellenleiter verstanden.

Um im Falle der Verwendung von Hauseinführungen die Medienleitungen wiederum ohne Leckage nach innen führen zu können, weisen die Hauseinführungen, und insbesondere die sogenannten Mehrspartenhauseinführungen, Aufnahmen auf, in die verschiedene Dichtungen eingesetzt werden können, wobei die Maße der Dichtungen jeweils an die durchzuführenden Medienleitungen angepasst sind.

Für jeden Leitungstyp gibt es spezielle Dichtungen bzw. Dichteinsätze. Zum Befestigen und Erzeugen der Dichtfunktion werden die Dichtungen in Durchgangsrichtung, also bezogen auf die Medienleitungen in axialer Richtung verspannt. Dazu weisen die Dichtungen ein komprimierbares Material auf, oder bestehen aus diesem, welches infolge der axialen Verspannung seitlich ausweicht, also quer zur Durchgangsrichtung, und sich dichtend einerseits gegen die Aufnahme und andererseits gegen die Medienleitung legt. Es gibt sowohl Dichtungen mit nur einer einzigen Durchgangsöffnung als auch Dichtungen, die jeweils mehrere Durchgangsöffnungen aufweisen. Die Durchgangsöffnungen können mittig oder außermittig in den Dichtungen angeordnet sein. Außermittig meint hierbei die Platzierung in einer Querschnittsebene senkrecht zur Durchgangsrichtung.

Insbesondere bei Dichtungen mit außermittig angeordneten Durchgangsöffnungen hat sich im Stand der Technik gezeigt, dass die Dichtungen trotz eigentlich korrekt dimensionierter Durchgangsöffnungen nach dem Verspannen der Dichtung in der Aufnahme der Hauseinführung oder im Durchbruch undicht sein können. Um diesem Problem zu begegnen, wurde in der Vergangenheit üblicherweise das Maß der Durchgangsöffnung für eine bestimmte Medienleitung unter deren Maß verringert. Hierdurch wird ein Übermaß erzeugt, welches auch im verspannten Zustand noch die Dichtigkeit zwischen Medienleitung und Hauseinführung bzw. Durchbruch gewährleisten soll. Wenngleich diese Vorgehensweise im Prinzip zuverlässig ist, wird dennoch der Montageaufwand, der hiermit zwangsläufig verbunden ist, als nachteilig empfunden.

DE 91 02 824 U1 offenbart eine Vorrichtung zum Abdichten der Enden eines Kabelschutzrohres. Die Abdichtvorrichtung umfasst eine innere Verschlussscheibe, eine äußere Verschlussscheibe und vier dazwischen angeordnete elastische Dichtungsscheiben. Durch das Anziehen von Spannschrauben wird mittels der elastischen Dichtringe eine Dichtwirkung zwischen der Innenseite des Schutzrohres und einem durch das Schutzrohr verlegten Kabeln erreicht. Die Verschlussscheiben weisen eine an den Querschnitt der durch das Schutzrohr hindurch gezogenen Leitung angepasste ovale Form auf.

Aus DE 10 2007 032891 A1 ist ein Dichtelement aus einem elastischen Material zum Einsetzen in eine Wandöffnung bekannt. Das Dichtelement weist eine außermittig angeordnete Hauptdurchführung zum Hindurchführen einer Leitung auf. Die Hauptdurchführung weist dabei einen runden oder ovalen Querschnitt auf, der jeweils an den Querschnitt der aufzunehmenden Leitung angepasst ist.

DE 20 2011 102722 U1 offenbart eine Vorrichtung zum Abdichten von durch Kernbohrungen oder Mauerhülsen geführten Kabeln oder Rohren mit einem Ringsegment aus einem Elastomermaterial. Das Ringsegment weist eine an einen Querschnitt einer das Ringsegment aufnehmende Maueröffnung angepasste kreis- oder ovalförmige äußere Form auf.

Der vorliegenden Erfindung lag somit die Aufgabe zugrunde, eine Dichtung der eingangs bezeichneten Art dahingehend zu verbessern, dass der Montageaufwand reduziert wird, ohne die Zuverlässigkeit hinsichtlich der Dichtfunktion zu beeinträchtigten.

Die Erfindung löst die ihr zugrundeliegende Aufgabe bei einer Dichtung der eingangs bezeichneten Art mit den Merkmalen von Anspruch 1. Insbesondere weist die erfindungsgemäße Dichtung eine oder mehrere Durchgangsöffnungen auf, die im unverspannten Zustand in der Schnittebene oval oder polygonal geformt ist bzw. sind. Die Erfindung macht sich die Erkenntnis zunutze, dass beim Verspannen der Dichtung in Durchgangsrichtung eine Materialverdrängung nicht nur in radialer Richtung auftritt, sondern auch in tangentialer Richtung, also quer zur radialen Richtung, und quer zur (axialen) Durchgangsrichtung. Das komprimierbare Material der Dichtung weicht insbesondere dahin aus, wo der Widerstand gegen die Verformung am geringsten ist. In der Umgebung einer Durchgangsöffnung ist dies beispielsweise die Richtung, in welcher am wenigsten Dichtmaterial vorhanden ist. Dies hat zur Folge, dass bei den Dichtungen im Stand der Technik die im unverspannten Zustand runden Querschnitte der Durchgangsöffnungen im verspannten Zustand unrund, nämlich im Wesentlichen oval verformt werden. Hier setzt die Erfindung an und schlägt vor, die Durchgangsöffnungen bereits im unverspannten Zustand oval oder polygonal zu formen. Die ovale bzw. polygonale Form wird dadurch definiert, dass die ovale bzw. polygonale Durchgangsöffnung entlang einer Nebenachse die geringste lichte Weite aufweist, und entlang einer Hauptachse die größte lichte Weite aufweist.

In einer Ausführungsform der Erfindung mit einer oder mehreren im unverspannten Zustand polygonal geformten Durchgangsöffnungen weisen die Durchgangsöffnungen vorzugsweise fünf oder mehr Flächen auf. Es hat sich herausgestellt, dass auch die Verwendung solcher polygonalen Öffnungsquerschnitte einen guten Kompromiss zwischen einfacher Herstellbarkeit, der Möglichkeit, starke Übermaße zugunsten einer leichten Montierfähigkeit zu vermeiden, und gleichzeitig befriedigender Dichtwirkung liefern.

Vorzugsweise werden die Durchgangsöffnungen in der Dichtung so ausgerichtet, dass im verspannten Zustand die Abweichung der lichten Weite entlang der Nebenachse von der lichten Weite entlang der Hauptachse geringer ist als im unverspannten Zustand. Vorzugsweise ist die lichte Weite im verspannten Zustand entlang der Nebenachse gleich oder wenigstens im Wesentlichen gleich der lichten Weite entlang der Hauptachse. Geringfügige Abweichungen ergeben sich zwangsläufig aufgrund der gewählten Stärke der Verspannung und bleiben in den weiteren Betrachtungen unberücksichtigt. Im Fall der polygonalen Ausgestaltung der Durchgangsöffnung oder Durchgangsöffnungen werden diese selbstverständlich niemals exakt kreisrund verformt werden. Eine ausreichende "Rundheit" wird erfindungsgemäß daher für beide Arten der Durchgangsöffnungen (oval oder polygonal) dann angenommen, wenn die lichte Weite der Nebenachse im verspannten Zustand weniger stark von der lichten Weite der Hauptachse abweicht, als im unverspannten Zustand.

Somit beruht der Erfindungsgedanke darauf, die unweigerlich auftretende "Schubbewegung" des Dichtungsmaterials quer zur Verspannungsrichtung bewusst in Kauf zu nehmen und diese bei der Formgebung der Durchgangsöffnungen im unverspannten Zustand bereits zu berücksichtigen, so dass die Verdrängungsbewegung des komprimierbaren Materials beim Verspannen im Endeffekt dazu beiträgt, die gewollte, in der Schnittebene kreisrunde Querschnittsform herzustellen.

Erfindungsgemäß weist die Dichtung einen Mittelpunkt auf, und die Durchgangsöffnung weist einen Mittelpunkt auf, und zwischen der Nebenachse und einer Radialachse, welche durch den Mittelpunkt der Durchgangsöffnung und den Mittelpunkt der Dichtung verläuft, ein Winkel von 45° oder weniger aufgespannt ist. Besonders bevorzugt ist zwischen der Radialachse und der Nebenachse ein Winkel von 25° oder weniger aufgespannt. Es hat sich herausgestellt, dass bei den vorangestellten bevorzugten Winkelbereichen ein zufriedenstellendes Dichtungsergebnis im verspannten Zustand, und somit eine zufriedenstellende "Rundheit" der Durchgangsöffnungen im verspannten Zustand erreicht wird.

Bei Dichtungen, in denen der vorgenannte Winkel 0° beträgt, fällt die Nebenachse der Durchgangsöffnung mit einer Achse durch der Radialachse durch den Mittelpunkt der Dichtung zusammen.

Vorzugsweise sind die Haupt- und Nebenachse zueinander rechtwinklig ausgerichtet.

In einer bevorzugte Ausführungsform weist die erfindungsgemäße Dichtung eine im unverspannten Zustand in der Schnittebene kreisförmig ausgebildete Durchgangsöffnung auf, welche einen Mittelpunkt aufweist und dazu eingerichtet ist, eine Medienleitung in sich aufzunehmen und im verspannten Zustand gegen diese abzudichten. Beispielsweise kann diese im unverspannten Zustand kreisförmige Durchgangsöffnung größer ausgebildet sein als die im unverspannten Zustand oval oder polygonal geformten Durchgangsöffnung(en) und zum Durchführen und Abdichten einer Fluidleitung angepasst sein, während die kleinere(n), oval oder polygonal geformten Durchgangsöffnung(en) für elektrische Leitungen oder Lichtwellenleiter verwendet wird bzw. werden, oder Durchgangsöffnungen für Spannmittel wie beispielsweise Schrauben darstellen. Es hat sich gezeigt, dass die Verformungseinflüsse auf die im unverspannten Zustand kreisförmige Durchgangsöffnung(en) umso geringer sind, je größer diese sind, und je mittiger sie in der Dichtung angeordnet sind.

In einer bevorzugten Ausführungsform der erfindungsgemäßen Dichtung mit mehreren im unverspannten Zustand der Dichtung oval oder polygonal geformten Durchgangsöffnungen weisen die Nebenachsen der Durchgangsöffnungen einen gemeinsamen Schnittpunkt auf.

In einer weiteren bevorzugten Ausführungsform der Dichtung mit einer im unverspannten Zustand kreisförmig ausgebildeten Durchgangsöffnung spannt die Nebenachse bzw. spannen die Nebenachsen der einen oder mehreren oval oder polygonal geformten Durchgangsöffnungen mit einer Achse, welche durch den Mittelpunkt der Durchgangsöffnung und den Mittelpunkt der kreisförmigen Durchgangsöffnung verläuft, einen Winkel von 25° oder weniger auf. Falls die Dichtung mehrere im unverspannten Zustand kreisförmige Durchgangsöffnungen aufspannt, gilt die vorgenannte Bedingung vorzugsweise für zumindest eine, mehrere oder sämtliche dieser Durchgangsöffnungen. Gemäß einer weiteren Ausführungsform verlaufen die Nebenachse bzw. Nebenachsen der einen oder mehreren im unverspannten Zustand oval oder polygonal geformten Durchgangsöffnungen durch den Mittelpunkt der im unverspannten Zustand kreisförmigen Durchgangsöffnung. Der Mittelpunkt der kreisförmigen Durchgangsöffnung stellt mit anderen Worten den gemeinsamen Schnittpunkt der Nebenachsen der oval oder polygonal geformten Durchgangsöffnungen dar.

Gemäß einer alternativen bevorzugten Ausführungsform liegt der gemeinsame Schnittpunkt der Nebenachse(n) der ein oder mehreren im unverspannten Zustand oval oder polygonal geformten Durchgangsöffnung(en) in einem Bereich zwischen dem Mittelpunkt der Dichtung und dem Mittelpunkt der im unverspannten Zustand kreisförmigen Durchgangsöffnung. Besonders bevorzugt liegt der gemeinsame Schnittpunkt der Nebenachsen der im unverspannten Zustand oval oder polygonal geformten Durchgangsöffnungen auf einer Geraden zwischen dem Mittelpunkt der Dichtung und dem Mittelpunkt der im unverspannten Zustand kreisförmigen Durchgangsöffnung.

In bevorzugten, alternativen Ausführungsformen ist die kreisförmige Durchgangsöffnung in der Schnittebene mittig oder außermittig angeordnet. Bei einer mittigen Anordnung fallen die Mittelpunkte der im unverspannten Zustand kreisförmigen Durchgangsöffnung und der Dichtung zusammen.

Die Erfindung betrifft in einem weiteren Aspekt eine Hauseinführung, insbesondere Mehrspartenhauseinführung, zum Einsatz in einen Durchbruch einer Gebäudewand, insbesondere Hauswand, mit mindestens einer Aufnahme für eine Dichtung zum Abdichten gegen eine oder mehrere Medienleitungen, und einer in der Aufnahme eingesetzten Dichtung.

Die Erfindung löst die eingangs genannte Aufgabe bei einer solchen Hauseinführung, indem die Dichtung nach einer der hierin vorstehend beschriebenen bevorzugten Ausführungsformen ausgebildet ist. Die Hauseinführung gemäß der Erfindung macht sich somit deren Vorteile zunutze, weshalb bezüglich der Vorteile der Hauseinführung und ihrer bevorzugten Ausführungsformen auf die vorstehenden Erläuterungen verwiesen wird.

Die Erfindung wird im Folgenden anhand bevorzugter Ausführungsbeispiele und unter Bezugnahme auf die beigefügten Figuren näher erläutert. Hierbei zeigen:
- Figuren 1a - c: verschiedene Ansichten einer Dichtung gemäß dem Stand der Technik in unterschiedlichen Stadien,
- Figuren 2a - c: eine Dichtung gemäß einem ersten Ausführungsbeispiel der Erfindung in unterschiedlichen Zuständen,
- Figur 3: eine Detailansicht der Darstellung gemäß der Figur 2a,
- Figur 4: eine Draufsicht auf eine Dichtung gemäß einem zweiten Ausführungsbeispiel gemäß der Erfindung, und
- Figur 5: eine Draufsicht auf eine Dichtung gemäß einem dritten Ausführungsbeispiel gemäß der Erfindung.

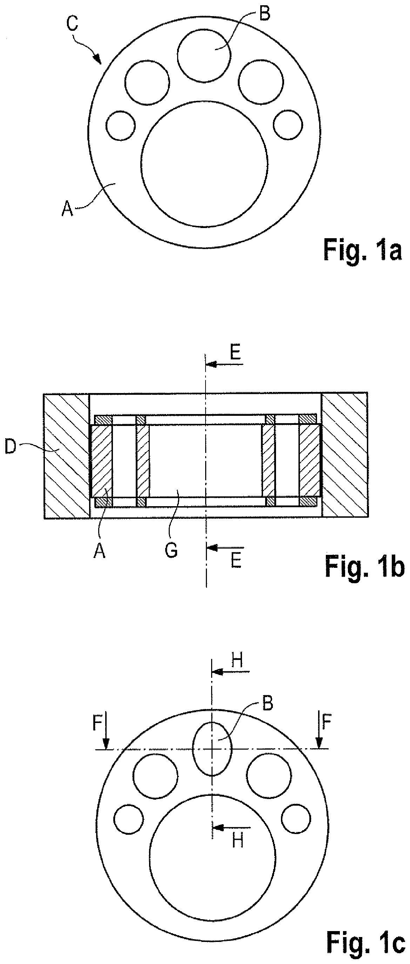

Die Erfindung wird im weiteren Verlauf in Gegenüberstellung zum bekannten Stand der Technik erläutert. Der Stand der Technik ist in den Figuren 1a, b und c vereinfacht abgebildet. Eine Dichtung C weist einen Grundkörper A auf. In dem Grundkörper A sind mehrere Durchgangsöffnungen B vorgesehen, durch welche in Durchgangsrichtung Medienleitungen hindurchführbar sind.

Eine solche Dichtung C wird in einer Aufnahme einer Hauseinführung D eingesetzt, siehe Figur 1b. Im Anschluss an das Einsetzen und gegebenenfalls Durchführen einer Medienleitung durch die Ausnehmung G wird die Dichtung C axial in Durchgangsrichtung verspannt, indem in Richtung der Pfeile E eine Kompressionskraft ausgeübt wird. Hierdurch dehnt sich der Grundkörper A der Dichtung C quer zur Verspannungsrichtung aus und kommt dichtend in Anlage mit der Hauseinführung D und gegebenenfalls mit der in Ausnehmung G eingeführten Medienleitung.

In Figur 1c ist dargestellt, wie sich diejenigen Durchgangsöffnungen B verhalten, in die nicht vor dem Verspannen bereits eine Medienleitung eingebracht wurde. In Richtung der Pfeile F hat die lichte Weite der Durchgangsöffnungen B deutlich stärker abgenommen als die lichte Weite der Richtungen der Pfeile H. Deswegen haben sich die Durchgangsöffnungen B oval verformt, wodurch sie mitunter nicht mehr in der Lage sind, gegen Medienleitungen mit rundem Querschnitt abzudichten, sofern diese Medienleitungen nicht im Verhältnis zum Durchmesser der Durchgangsöffnung B in unverspanntem Zustand mit deutlichem Übermaß versehen sind.

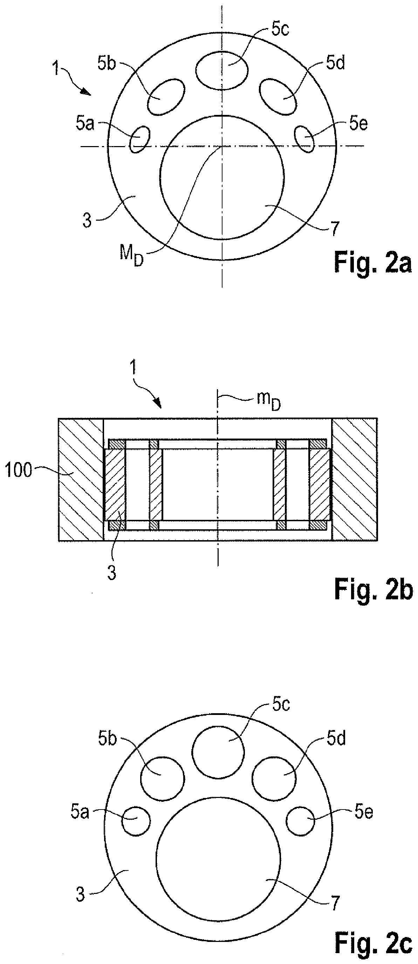

Die Erfindung wird im Kontrast dazu anhand der folgenden Figuren dargestellt. Die Anordnung der Figuren 2a, b und c entspricht in ihren Stadien der Darstellung der Figuren 1a - c. In Figur 2a ist eine erfindungsgemäße Dichtung 1 in unverspanntem Zustand in einer Draufsicht dargestellt. Der Betrachter blickt in Durchgangsrichtung auf die Dichtung 1 in Figur 2a. Die Dichtung 1 weist einen Grundkörper 3 auf, der aus einem elastisch komprimierbaren Material besteht. In den Grundkörper 3 der Dichtung 1 sind mehrere Durchgangsöffnungen 5a, b, c, d, e eingebracht, welche sich in Durchgangsrichtung erstrecken. Die Durchgangsöffnungen 5a - e sind oval geformt.

Die Dichtung 1 weist ferner eine weitere, im Vergleich zu den Durchgangsöffnungen 5a - e größer dimensionierte Durchgangsöffnung 7 mit in unverspanntem Zustand kreisrundem Öffnungsquerschnitt in Durchgangsrichtung auf. Die Durchgangsöffnungen 5a - e sowie die Durchgangsöffnung 7 in dem Ausführungsbeispiel gemäß Figur 2a sind außermittig relativ zu der dem Mittelpunkt M_{D} angeordnet.

Durch den Mittelpunkt M_{D} erstreckt sich in Durchgangsrichtung die Mittenachse m_{D}, siehe Figur 2b. Beim Komprimieren der Dichtung 1 nach Einsetzen in eine entsprechende Aufnahme einer Hauseinführung 100 verhält sich die Dichtung 1 im Wesentlichen so wie die Dichtung aus dem Stand der Technik. Das komprimierbare Material des Grundkörpers 3 weicht quer zur Verspannrichtung entlang der Mittenachse m_{D} aus.

Da die Durchgangsöffnungen 5a - e allerdings gemäß Figur 2a im unverspannten Zustand oval geformt und entsprechend ausgerichtet waren, bewirkt das seitliche Ausweichen des elastisch komprimierbaren Materials des Grundkörpers 3, dass im verspannten Zustand gemäß Figur 2c die Durchgangsöffnungen 5a, b, c, d und e einen in der Schnittebene im Wesentlichen kreisförmigen Querschnitt einnehmen. In diesem Zustand ist die Dichtfunktion bezüglich adäquat dimensionierter Medienleitungen einwandfrei gewährleistet.

Die optionale zusätzliche Durchgangsöffnung 7 mit in unverspanntem Zustand kreisförmigem Querschnitt ist im verspannten Zustand zwar nicht mehr strikt kreisförmig ausgebildet . Allerdings ist aufgrund ihrer vergleichsweise großen lichten Weite die Verformung nach dem Verspannen geringer, als dies bei den Durchgangsöffnungen 5a-e der Fall wäre, wenn die Durchgangsöffnungen 5a-e im unverspannten Zustand nicht oval bzw. polygonal vorgeformt wären.

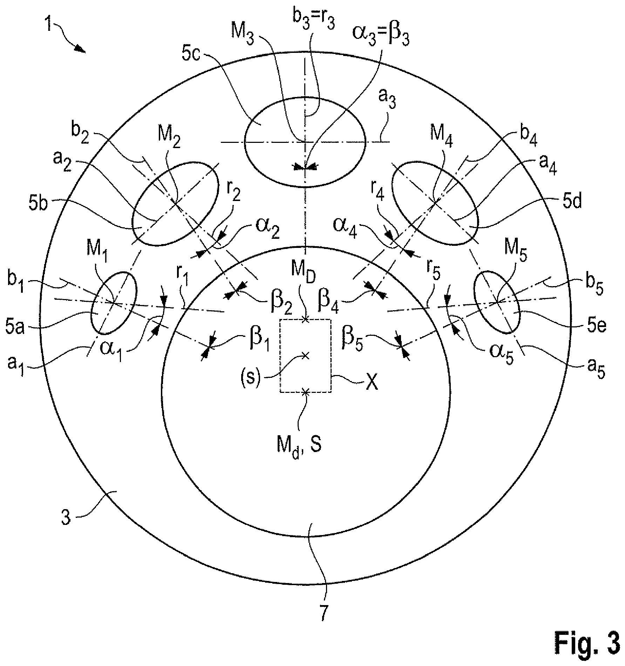

Eine vergrößerte Ansicht der Darstellung gemäß 2a ist in Figur 3 mit weiteren Erläuterungen und Bezugszeichen wiedergegeben. Die Durchgangsöffnungen 5a - e weisen jeweils einen Mittelpunkt Mᵢ auf, wobei "i" als Platzhalter für eine Indexzahl 1 - 5 der jeweiligen Durchgangsöffnung steht. Der Mittelpunkt Mᵢ ist der Schnittpunkt der Hauptachse aᵢ mit der Nebenachse bᵢ, wobei entlang der Hauptachse die jeweilige Durchgangsöffnung ihre größte lichte Weite einnimmt, und entlang der Nebenachse bᵢ ihre geringste lichte Weite. Die Haupt- und Nebenachsen aᵢ, bᵢ der Durchgangsöffnungen 5a - e sind derart ausgerichtet, dass beim Übergang vom Zustand gemäß Figur 2a und 3 in dem verspannten Zustand gemäß Figur 2c eine Materialverdrängung dahingehend stattfindet, dass im verspannten Zustand die lichten Weiten entlang der Haupt- und Nebenachsen aᵢ, bᵢ im Wesentlichen gleich sind, vorzugsweise exakt gleich sind.

Zumindest einige der Nebenachsen bᵢ der Durchgangsöffnungen 5a - e treffen sich vorzugsweise in einem gemeinsamen Schnittpunkt S. Der gemeinsame Schnittpunkt S der Nebenachsen bᵢ aller Durchgangsöffnungen 5a - e liegt vorzugsweise in einem Bereich X zwischen einem Mittelpunkt M_{d} der Durchgangsöffnung 7 mit kreisförmigem Querschnitt und einem Mittelpunkt M_{D} der Dichtung 1. Da die Durchgangsöffnung 7 in der Dichtung 1 außermittig im Grundkörper 3 in der Schnittebene platziert ist, ist ihr Mittelpunkt M_{d} relativ zu dem Mittelpunkt M_{D} der Dichtung 1 beabstandet.

Die Durchgangsöffnungen 5a - e sind so ausgerichtet, dass ihre Nebenachse bᵢ einen Winkel mit einer Radiallinie durch die Mittenpunkte Mᵢ der Durchgangsöffnungen 5a - e und den Mittelpunkt M_{D} der Dichtung 1 aufspannt. Der Winkel *α*ᵢ liegt in einem Bereich von 45° oder geringer, vorzugsweise in einem Bereich von 25° oder geringer.

Wenn der gemeinsame Schnittpunkt S einiger oder sämtlicher der Nebenachsen bᵢ im vorliegenden Fall gleich dem Mittelpunkt M_{d} der weiteren Durchgangsöffnung 7 ist, beträgt der zwischen den Nebenachsen bᵢ und einer jeweiligen Radiallinie durch den Mittelpunkt Mᵢ der Durchgangsöffnungen 5a - e und dem Mittelpunkt der im unverspannten Zustand kreisförmigen Durchgangsöffnung 7 aufgespannte Winkel *β*ᵢ = 0°. Wenn der gemeinsame Schnittpunkt der Nebenachsen bᵢ der Durchgangsöffnungen 5a - e auch von dem Mittelpunkt M_{d} der Durchgangsöffnung 7 beabstandet ist, ist der Winkel *β*ᵢ ungleich 0°.

Die Durchgangsöffnungen 5a - e und 7 bei der Dichtung 1 gemäß dem ersten Ausführungsbeispiel sind vornehmlich zur Durchführung von Medienleitungen dimensioniert. Wie weiter oben bereits erörtert wurde, betrifft die Erfindung allerdings nicht bloß die Ausgestaltung von Durchgangsöffnungen für Medienleitungen, sondern in gleicher Weise auch die Ausgestaltung von Durchgangsöffnungen für Spannmittel, die zum Verspannen der Dichtung in Axialrichtung bzw. Durchgangsrichtung verwendet werden.

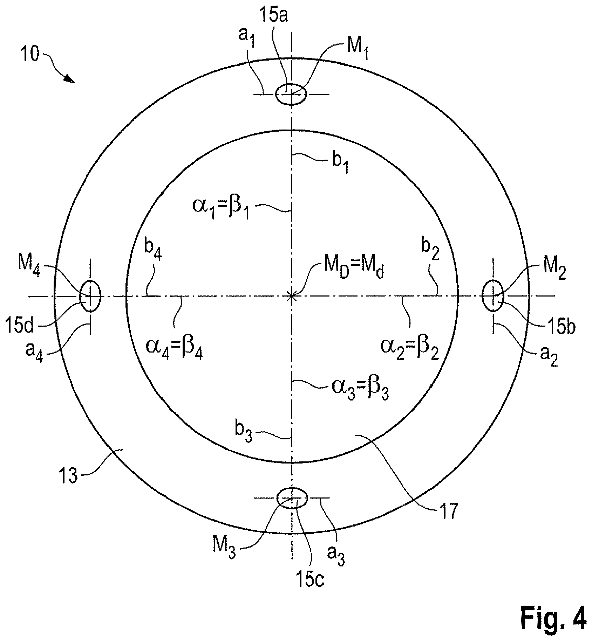

In Figur 4 ist ein zweites Ausführungsbeispiel in Form einer Dichtung 10 schematisch dargestellt. Der Spannvorgang vollzieht sich bei diesem Ausführungsbeispiel in exakt gleicher Weise wie bei dem ersten Ausführungsbeispiel der Dichtung 1 gemäß den Figuren 2a - c und 3. Vor diesem Hintergrund wird auf die Darstellung des Spannvorgangs selbst und das Abbild der Dichtung 10 im verspannten Zustand verzichtet. Die Dichtung 10 weist einen Grundkörper 13 auf. In den Grundkörper 13 sind mehrere Durchgangsöffnungen 15a, b, c, d für Spannmittel sowie eine weitere Durchgangsöffnung 17 für eine Medienleitung eingebracht. Die Durchgangsöffnungen sind wie beim vorigen Ausführungsbeispiel in Durchgangsrichtung orientiert.

Die Durchgangsöffnungen 15a - d sind im unverspannten Zustand oval geformt und weisen jeweils eine Hauptachse aᵢ auf, entlang derer die Durchgangsöffnung 15a - d ihre größte lichte Weite einnimmt, sowie eine Nebenachse bᵢ, entlang weicher die Durchgangsöffnung 15a - d ihre geringste lichte Weite einnimmt. Das Indexzeichen i steht auch hier für eine laufende Nummer der jeweiligen in Figur 4 dargestellten Durchgangsöffnungen und nimmt einen Wert von 1 bis 4 ein. Die Durchgangsöffnungen 15a - d sind relativ zum Mittelpunkt M_{D} der Dichtung 10 außermittig angeordnet, allerdings gleichmäßig entlang des Umfangs des ringförmigen Grundkörpers 13 verteilt. Eine weitere Durchgangsöffnung 17 ist in der Dichtung 10 vorgesehen, welche mittig relativ zum Mittelpunkt M_{D} angeordnet ist, sodass die Mittelpunkte M_{D} und ein Mittelpunkt M_{d} der Dichtung mit der Durchgangsöffnung 17 zusammenfallen.

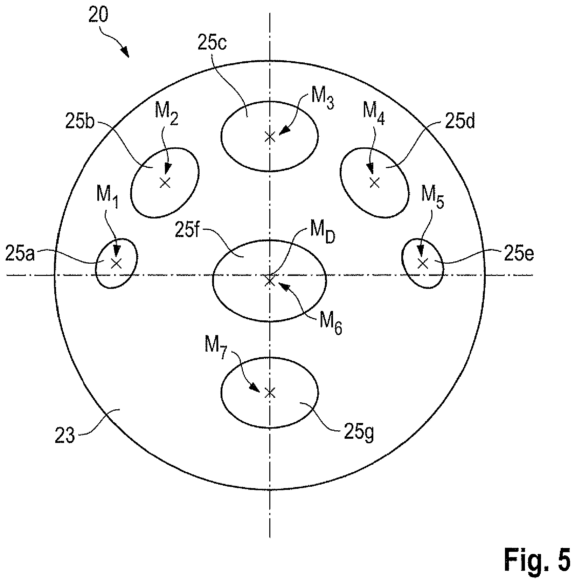

In Figur 5 ist eine Dichtung 20 gezeigt. Die Dichtung 20 ist strukturell eng verwandt mit Dichtung 1 gemäß Figuren 2a - c und weist einen Grundkörper 23 auf, in dem mehrere Durchgangsöffnungen 25a-g ausgebildet sind. Als nennenswerter Unterschied sei an dieser Stelle hervorgehoben, dass anstelle der kreisrunden Durchgangsöffnung 7 der Dichtung 1 hier bei der Dichtung 20 mehrere weitere Durchgangsöffnungen 25f, g vorgesehen sind, welche im unverspannten Zustand oval geformt sind. Hinsichtlich der Mittelpunkte Mᵢ der Durchgangsöffnungen 25a - g und der durch sie verlaufenden Haupt- und Nebenachsen gelten die gleichen Bedingungen wie in Bezug auf die Durchgangsöffnungen 5a-e der Dichtung 1 gemäß Figur 3, Dasselbe gilt auch bezüglich der winkligen Ausrichtung der Nebenachsen der Durchgangsöffnungen 5 a-e bzw. 25a-g, wobei letztere der Übersichtlichkeit halber in Figur 5 nicht dargestellt sind. Auch diesbezüglich wird zur Veranschaulichung auf Figur 3 verwiesen.

Die beiden zusätzlichen Durchgangsöffnungen 25f, g sind gemeinsam mit der Durchgangsöffnung 5c in einer Symmetrieebene angeordnet, welche auch durch den Mittelpunkt M_{D} der Dichtung 20 verläuft. Der Grundkörper 23 der Dichtung 20 ist vorzugsweise aus einem homogenen Material hergestellt.

Das zweite Ausführungsbeispiel unterscheidet sich im Detail lediglich darin vom ersten Ausführungsbeispiel, dass der Winkel zwischen den Nebenachsen bᵢ und den jeweiligen Radiallinien durch die Mittelpunkte Mᵢ und den Mittelpunkt M_{D} bzw. M_{d} der Dichtung bzw. der kreisförmigen Durchgangsöffnung 17 gleich 0 ist.

Wenngleich die Durchgangsöffnungen 15a - d gemäß dem zweiten Ausführungsbeispiel vorstehend unter Bezugnahme auf die Verwendung mit Spannmitteln erörtert wurden, und die Durchgangsöffnungen 5a - e für das erste Ausführungsbeispiel nur im Zusammenhang mit einer Verwendung für Medienleitungen erörtert wurden, so wird selbstverständlich verstanden, dass eine erfindungsgemäße Dichtung auch sowohl Durchgangsöffnungen für Medienleitungen wie auch Durchgangsöffnungen für Spannmittel aufweisen kann, welche jeweils im unverspannten Zustand bereits erfindungsgemäß oval geformt sind.

## Patentansprüche

1. Dichtung (1, 10) zum Abdichten gegen Medienleitungen, wobei die Dichtung
- eine Durchgangsrichtung (m_{D}) für Medienleitungen aufweist,
- zumindest teilweise aus einem elastisch komprimierbaren Material besteht, und
- dazu eingerichtet ist, mittels Verspannen der Dichtung in Durchgangsrichtung eine Dichtwirkung zu erzeugen,
- mindestens eine in einer Schnittebene quer zur Durchgangsrichtung außermittig angeordnete Durchgangsöffnung (5a-e; 15a-d) zur Aufnahme von Medienleitungen und/oder Spannmitteln mit einem im Wesentlichen kreisrunden Querschnitt in Durchgangsrichtung aufweist, wobei
- die Durchgangsöffnung (5a-e; 15a-d) im unverspannten Zustand (5a-e; 15a-d) in der Schnittebene oval oder polygonal geformt ist, wobei die ovale oder polygonale Durchgangsöffnung (5a-e; 15a-d) eine geringste lichte Weite entlang einer Nebenachse (bᵢ) und eine größte lichte Weite entlang einer Hauptachse (aᵢ) aufweist, **dadurch gekennzeichnet, dass** wobei die Dichtung einen Mittelpunkt (M_{D}) aufweist, die Durchgangsöffnung einen Mittelpunkt (Mᵢ) aufweist, und zwischen der Nebenachse (bᵢ) und einer Radialachse (rᵢ) welche durch den Mittelpunkt (Mᵢ) der Durchgangsöffnung und den Mittelpunkt (M_{D}) der Dichtung verläuft, ein Winkel von 45° oder weniger aufgespannt ist.

2. Dichtung nach Anspruch 1,
wobei die Haupt- und Nebenachse (aᵢ; bᵢ) zueinander rechtwinklig ausgerichtet sind.

3. Dichtung nach einem der vorstehenden Ansprüche,
wobei die Durchgangsöffnung (5a-e; 15a-d) im unverspannten Zustand im Wesentlichen elliptisch geformt ist.

4. Dichtung nach einem der vorstehenden Ansprüche,
mit einer im unverspannten Zustand in der Schnittebene kreisförmig ausgebildeten Durchgangsöffnung (7, 17), welche einen Mittelpunkt M_{d} aufweist, und dazu eingerichtet ist, eine Medienleitung in sich aufzunehmen und in verspanntem Zustand gegen diese abzudichten.

5. Dichtung nach einem der vorstehenden Ansprüche,
mit mehreren im unverspannten Zustand der Dichtung oval oder polygonal geformten Durchgangsöffnungen (5a-e; 15a-d), wobei zumindest einige der Nebenachsen (bᵢ) der Durchgangsöffnungen einen gemeinsamen Schnittpunkt S aufweisen.

6. Dichtung nach Anspruch 4 oder 5,
wobei die Nebenachse bzw. Nebenachsen (bᵢ) der einen oder mehreren im unverspannten Zustand oval oder polygonal geformten Durchgangsöffnungen (15a-d) mit einer Achse, welche durch den Mittelpunkt der Durchgangsöffnung (Mᵢ) und den Mittelpunkt (M_{d}) der kreisförmigen Durchgangsöffnung verläuft, einen Winkel (βᵢ) von 25° oder weniger aufspannt.

7. Dichtung nach einem der Ansprüche 4 bis 6,
wobei die Nebenachse bzw. Nebenachsen der einen oder mehreren im unverspannten Zustand oval oder polygonal geformten Durchgangsöffnungen durch den Mittelpunkt M_{d} der im unverspannten Zustand kreisförmigen Durchgangsöffnung verläuft bzw. verlaufen.

8. Dichtung nach einem der Ansprüche 4 bis 6,
wobei der gemeinsame Schnittpunkt der Nebenachse(n) (bᵢ) der ein oder mehreren im unverspannten Zustand oval oder polygonal geformten Durchgangsöffnung(en) (15a-d) in einem Bereich zwischen dem Mittelpunkt (M_{D}) der Dichtung und dem Mittelpunkt (M_{d}) der im unverspannten Zustand kreisförmigen Durchgangsöffnung liegt, besonders bevorzugt auf einer Geraden zwischen dem Mittelpunkt der Dichtung (M_{D}) und dem Mittelpunkt (M_{d}) der im unverspannten Zustand kreisförmigen Durchgangsöffnung.

9. Dichtung nach einem der Ansprüche 4 bis 8,
wobei die kreisförmige Durchgangsöffnung (7) in der Schnittebene außermittig angeordnet ist.

10. Dichtung nach einem der Ansprüche 4 bis 8,
wobei die kreisförmige Durchgangsöffnung (17) in der Schnittebene mittig angeordnet ist.

11. Dichtung nach einem der vorstehenden Ansprüche,
wobei die Dichtung zum Einsatz in eine korrespondierende Aufnahme einer Hauseinführung, insbesondere Mehrspartenhauseinführung, eingerichtet ist.

12. Dichtung nach einem der Ansprüche 1 bis 10,
wobei die Dichtung zum Einsatz in einem Durchbruch einer Gebäudewand, insbesondere Hauswand, eingerichtet ist.

13. Hauseinführung, insbesondere Mehrspartenhauseinführung, zum Einsatz in einem Durchbruch einer Gebäudewand, insbesondere Hauswand, mit
mindestens einer Aufnahme für eine Dichtung zum Abdichten gegen eine oder mehrere Medienleitungen, und einer in der Aufnahme eingesetzten Dichtung,
**dadurch gekennzeichnet, dass** die Dichtung nach einem der vorstehenden Ansprüche ausgebildet ist.

## Claims

1. Seal (1, 10) for sealing against media lines, wherein the seal
- has a passage direction (m_{D}) for media lines,
- comprises at least partially a resiliently compressible material, and
- is configured to produce a sealing action by tensioning the seal in the passage direction,
- at least one through-opening (5a-e; 15a-d) which is arranged eccentrically in a plane of section transversely relative to the passage direction for receiving media lines and/or clamping means having a substantially circular cross-section in a passage direction, wherein
- the through-opening (5a-e; 15a-d) is formed in an oval or polygonal manner in the non-tensioned state (5a-e; 15a-d) in the plane of section, wherein the oval or polygonal through-opening (5a-e; 15a-d) has a smallest clear width along an auxiliary axis (bᵢ) and a greatest clear width along a main axis (aᵢ), **characterised in that**, wherein the seal has a centre (M_{D}), the through-opening has a centre (Mᵢ) and between the auxiliary axis (bᵢ) and a radial axis (rᵢ), which extends through the centre (Mᵢ) of the through-opening and the centre (M_{D}) of the seal, an angle of 45° or less is defined.

2. Seal according to claim 1,
wherein the main axis and auxiliary axis (aᵢ; bᵢ) are orientated at right-angles with respect to each other.

3. Seal according to either of the preceding claims,
wherein the through-opening (5a-e; 15a-d) is formed in a substantially elliptical manner in the non-tensioned state.

4. Seal according to any one of the preceding claims,
having a through-opening (7, 17) which is formed in a circular manner in the plane of section in the non-tensioned state and which has a centre (M_{d}) and which is configured to receive a media line therein and to seal against it in the tensioned state.

5. Seal according to any one of the preceding claims,
having a plurality of through-openings (5a-e; 15a-d) which are formed in an oval or polygonal manner in the non-tensioned state of the seal, wherein at least some of the auxiliary axes (bᵢ) of the through-openings have a common intersection S.

6. Seal according to claim 4 or claim 5,
wherein the auxiliary axis/axes (bᵢ) of the one or more through-openings (15a-d), which are formed in the non-tensioned state in an oval or polygonal manner and which have an axis which extends through the centre of the through-opening (Mᵢ) and the centre (M_{d}) of the circular through-opening, define an angle (βᵢ) of 25° or less.

7. Seal according to any one of claims 4 to 6,
wherein the auxiliary axis or axes of the one or more through-openings which are formed in the non-tensioned state in an oval or polygonal manner extend(s) through the centre (M_{d}) of the through-opening which is circular in the non-tensioned state.

8. Seal according to any one of claims 4 to 6,
wherein the common intersection of the auxiliary axis/axes (bᵢ) of the one or more through-opening(s) which is/are formed in an oval or polygonal manner in the non-tensioned state is located in a region between the centre (M_{D}) of the seal and the centre (M_{d}) of the through-opening which is circular in the non-tensioned state, in a particularly preferred manner on a straight line between the centre of the seal (M_{D}) and the centre (M_{d}) of the through-opening which is circular in the non-tensioned state.

9. Seal according to any one of claims 4 to 8,
wherein the circular through-opening (7) is arranged eccentrically in the plane of section.

10. Seal according to any one of claims 4 to 8,
wherein the circular through-opening (17) is arranged centrally in the plane of section.

11. Seal according to any one of the preceding claims,
wherein the seal is configured for insertion in a corresponding receiving member of a house infeed, in particular a multi-section house infeed.

12. Seal according to any one of claims 1 to 10,
wherein the seal is configured for insertion in an aperture of a building wall, in particular a house wall.

13. House infeed, in particular multi-section house infeed, for insertion in an aperture of a building wall, in particular a house wall, having
at least one receiving member for a seal for sealing against one or more media lines, and a seal which is inserted in the receiving member,
**characterised in that** the seal is constructed according to any one of the preceding claims.

## Revendications

1. Joint d'étanchéité (1, 10) servant à l'étanchéification par rapport à des conduites de fluide, dans lequel le joint d'étanchéité
- présente un sens de passage (mD) pour des conduites de fluide,
- est constitué au moins en partie d'un matériau pouvant être compressé élastiquement, et
- est mis au point pour générer une action étanche dans le sens de passage au moyen du serrage du joint d'étanchéité,
- présente au moins une ouverture de passage (5a-e ; 15a-d) disposée de manière excentrée dans un plan de coupe de manière transversale par rapport au sens de passage, servant à loger des conduites de fluide et/ou des moyens de serrage avec une section transversale sensiblement ronde circulaire dans le sens de passage,
dans lequel
- l'ouverture de passage (5a-e ; 15a-d) est façonnée dans l'état non serré (5a-e ; 15a-d) de manière ovale ou polygonale dans le plan de coupe, dans lequel l'ouverture de passage (5a-e ; 15a-d) ovale ou polygonale présente une petite largeur la plus petite le long d'un axe secondaire (bᵢ) et une petite largeur la plus grande le long d'un axe principal (aᵢ), **caractérisé en ce que**
le joint d'étanchéité présente un point central (M_{D}), l'ouverture de passage présente un point central (Mᵢ), et un angle de 45° ou moins est formé entre l'axe secondaire (bᵢ) et un axe radial (rᵢ), lequel s'étend à travers le point central (Mᵢ) de l'ouverture de passage et le point central (M_{D}) du joint d'étanchéité.

2. Joint d'étanchéité selon la revendication 1,
dans lequel l'axe principal et l'axe secondaire (aᵢ, bᵢ) sont orientés à angle droit l'un par rapport à l'autre.

3. Joint d'étanchéité selon l'une quelconque des revendications précédentes,
dans lequel l'ouverture de passage (5a-e ; 15a-d) est façonnée de manière sensiblement elliptique dans l'état non serré.

4. Joint d'étanchéité selon l'une quelconque des revendications précédentes,
avec une ouverture de passage (7, 17) réalisée en forme de cercle dans le plan de coupe dans l'état non serré, laquelle présente un point central M_{d} et qui est mise au point pour loger en son sein une conduite de fluide et pour assurer l'étanchéification par rapport à celle-ci dans l'état serré.

5. Joint d'étanchéité selon l'une quelconque des revendications précédentes,
avec plusieurs ouvertures de passage (5a-e ; 15a-d) façonnées de manière ovale ou polygonale dans l'état non serré du joint d'étanchéité, dans lequel au moins certains des axes secondaires (bᵢ) des ouvertures de passage présentent un point d'intersection S commun.

6. Joint d'étanchéité selon la revendication 4 ou 5, dans lequel l'axe secondaire ou les axes secondaires (bᵢ) de l'ouverture de passage ou des plusieurs ouvertures de passage (15a-d) façonnées de manière ovale ou polygonale dans l'état non serré forment avec un axe, lequel s'étend à travers le point central de l'ouverture de passage (Mᵢ) et le point central (M_{d}) de l'ouverture de passage de forme circulaire, un angle (βᵢ) de 25° ou moins.

7. Joint d'étanchéité selon l'une quelconque des revendications 4 à 6,
dans lequel l'axe secondaire ou les axes secondaires de l'ouverture de passage ou des plusieurs ouvertures de passage façonnées de manière ovale ou polygonale dans l'état non serré s'étend ou s'étendent à travers le point central M_{d} de l'ouverture de passage de forme circulaire dans l'état non serré.

8. Joint d'étanchéité selon l'une quelconque des revendications 4 à 6,
dans lequel le point d'intersection commun de l'axe/des axes secondaire(s) (bᵢ) de l'ouverture de passage ou des ouvertures de passage (15a-d) façonnées de manière ovale ou polygonale dans l'état non serré se situe dans une zone entre le point central (M_{D}) du joint d'étanchéité et le point central (M_{d}) de l'ouverture de passage de forme circulaire dans l'état non serré, de manière particulièrement préférée sur une droite entre le point central du joint d'étanchéité (M_{D}) et le point central (M_{d}) de l'ouverture de passage de forme circulaire dans l'état non serré.

9. Joint d'étanchéité selon l'une quelconque des revendications 4 à 8,
dans lequel l'ouverture de passage (7) de forme circulaire est disposée de manière excentrée dans le plan de coupe.

10. Joint d'étanchéité selon l'une quelconque des revendications 4 à 8,
dans lequel l'ouverture de passage (17) de forme circulaire est disposée au centre dans le plan de coupe.

11. Joint d'étanchéité selon l'une quelconque des revendications précédentes,
dans lequel le joint d'étanchéité est mis au point pour être inséré dans un logement correspondant d'un branchement domestique, en particulier dans un branchement domestique multi-voies.

12. Joint d'étanchéité selon l'une quelconque des revendications 1 à 10,
dans lequel le joint d'étanchéité est mis au point pour être inséré dans une percée d'un mur de bâtiment, en particulier d'un mur de maison.

13. Branchement domestique, en particulier branchement domestique multi-voies, destiné à être inséré dans une percée d'un mur de bâtiment, en particulier d'un mur de maison, avec
au moins un logement pour un joint d'étanchéité servant à l'étanchéification par rapport à une ou plusieurs conduites de fluide, et un joint d'étanchéité inséré dans le logement,
**caractérisé en ce que** le joint d'étanchéité est réalisé selon l'une quelconque des revendications précédentes.
